# EUROPEAN PATENT APPLICATION

(11) **EP 4 530 992 A1**
(43) Date of publication of application: **02.04.2025**
(21) Application number: 24201173.2
(22) Date of filing: 18.09.2024
(51) Int. Cl.: G06V 10/141, G06V 10/143, G06V 10/145, G06V 40/16, G06V 40/18

(54) **MULTIPLE ILLUMINATION CONDITIONS FOR BIOMETRIC AUTHENTICATION**

(30) Priority: 27.09.2023 US 202363585681 P; 03.04.2024 US 202418625883
(71) Applicant: Apple Inc., Cupertino, CA 95014 (US)
(72) Inventor: MAILA, Tomi P., Cupertino, 95014 (US); ZHANG, Gendong, Cupertino, 95014 (US); HALLER, Martin, Cupertino, 95014 (US); SENGELAUB, Tom, Cupertino, 95014 (US); NIKIFOROV, Andrei, Cupertino, 95014 (US); DEHESTANIARDEKANI, Reza, Cupertino, 95014 (US); BROGLE, Kyle C., Cupertino, 95014 (US); XU, Qijie, Cupertino, 95014 (US)
(74) Representative: Bateman, Samuel Alec

(57) **Abstract**

Methods and apparatus for illuminating a biometric aspect, such as periocular region features or iris features, with multiple illumination configurations to create multiple illumination channels for computer analysis are disclosed. Multiple illumination channels may be used for quality assurance by comparing the actual illumination channel property of a given image to the illumination channel that was activated for image capture. Images captured at the multiple illumination channels can also be used in biometric authentication by providing additional information for comparison to a stored template generated from images taken at multiple illumination channels during enrollment. Biometric authentication using a quality assurance process may be resistant to attempts to bypass biometric authentication.

## Description

### BACKGROUND

### Priority Claim

This application claims benefit of priority to U.S. Provisional Application Serial No. 63/585,681, entitled "Multiple Illumination Conditions for Biometric Authentication," filed September 27, 2023, and which is incorporated herein by reference in its entirety.

### Description of the Related Art

Biometric authentication technology uses one or more biometric aspects of a person to identify that person, for example for secure, authenticated access to devices, systems, etc. Typically, in a registration process, one or more images are captured of biometric aspects to be tracked (e.g., images of a person's iris(es) may be captured), and the images are processed to generate a set of metrics that are unique to, and thus uniquely identify, that person. At a later time, when the person attempts to access the device, system, etc., images of the person's biometric aspects are again captured and processed using a similar algorithm to the one used during registration. Metrics determined from the data captured at the later time are compared to stored metrics from the registration and, if a match between the two is sufficiently good, the person is authenticated.

### SUMMARY

Biometric authentication systems using multiple illumination channels to capture images of a biometric aspect may be able to derive more information than biometric authentication systems which do not use multiple illumination channels. The biometric authentication system may use the multiple illumination channels in a quality assurance algorithm, for example, to identify instances wherein a non-real representation of a biometric aspect is being presented in place of a real biometric aspect, such as a printout of a picture of an eye being presented instead of an actual person engaging with the system to have an image of the person's eye captured. Also, the multiple illumination channels may provide additional information streams that may be used to increase a robustness of a biometric authentication process. For example, images captured under different illumination conditions may be considered to be images of "different illumination channels." In this way, not only may a biometric aspect match, such as an iris match, be evaluated, but the biometric authentication process may further evaluate matching properties of several versions of iris images captured with different illumination channels. This may increase the security of the biometric authentication process. Also, an order in which illumination channels are applied may be tracked, or otherwise known by the biometric authentication process, and the biometric authentication process may verify not only an iris match, but also that the iris image illumination channel matches the illumination channel applied for a given image capture. Also, using multiple illumination channels in a quality assurance algorithm, as mentioned above, may conserve computer resources by bypassing further processing of images that have a non-matching illumination channel property.

In some embodiments, a machine learning assisted quality assurance algorithm may be used to further reduce computer resources expended to identify matching and non-matching illumination channel properties. For example, a machine learning model may be trained to generate inferences as to an illumination channel property of a given image, which can then be compared to a known illumination channel applied when capturing the given image.

In some embodiments, multiple illumination channels may be used to evaluate multiple types of biometric aspects, such as biometric aspects in the periocular region, and/or in the eye, such as the iris. For example, images of a periocular region captured using multiple illumination channels may provide information about a three-dimensional (3D) structure of a periocular region. Other biometric aspects may include a face, an ear, and a hand. A biometric authentication system may use such information about 3D structures of biometric aspects to perform authentication or may use such information in combination with an iris-based biometric authentication process or another kind of authentication system.

### BRIEF DESCRIPTION OF THE DRAWINGS

FIG. 1A is a front view of an illumination source with multiple independent light-emitting elements, according to some embodiments.
FIG. 1B is a side view of an illumination source using an illumination configuration to generate an illumination channel, as well as a controller, a camera, and a biometric aspect, according to some embodiments.
FIG. 1C is a side view of an illumination source using a different illumination configuration than the one in use in FIG. 1B, as well as a controller, a camera, and a biometric aspect, according to some embodiments.
FIG. 1D is a graphical representation of three illumination configurations and three illumination channels that may be generated by the respective illumination configurations, according to some embodiments.
FIG. 2A is a block diagram illustrating components of a multiple illumination channel input capture system that may be implemented by a controller used to capture images for evaluation by a multiple illumination channel analysis system, such as with regard to illumination channels applied when capturing the images, according to some embodiments.
FIG. 2B is a block diagram illustrating components of an example multiple illumination channel analysis system that may be implemented by a controller, according to some embodiments.
FIG. 3 is a block diagram illustrating a remote training system that trains a machine learning model for use in a quality assurance system and a set of devices that use the trained machine learning model to evaluate illumination channels, according to some embodiments.
FIG. 4 is a process flow diagram illustrating an example illumination channel consistency determination process, according to some embodiments.
FIG. 5 is a process flow diagram illustrating a possible biometric authentication process that uses a 3D structure in combination with iris-based biometric authentication, according to some embodiments.
FIGs. 6A-D illustrate examples of information about 3D structure and other biometric surface information that may be used by a multiple illumination channel analysis system, according to some embodiments.
FIGs. 7A-C illustrate example devices that could be used to implement a multiple illumination channel analysis system, according to some embodiments.
FIG. 8 is a block diagram illustrating an example computing device that may be used, according to some embodiments.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

"Comprising." This term is open-ended. As used in the claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured To." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware - for example, circuits, memory storing program instructions executable to implement the operation, etc. Reciting that a unit/circuit/component is "configured to" perform one or more tasks is expressly intended not to invoke 35 U.S.C. § 112, paragraph (f), for that unit/circuit/component. Additionally, "configured to" can include generic structure (e.g., generic circuitry) that is manipulated by software or firmware (e.g., an FPGA or a general-purpose processor executing software) to operate in manner that is capable of performing the task(s) at issue. "Configure to" may also include adapting a manufacturing process (e.g., a semiconductor fabrication facility) to fabricate devices (e.g., integrated circuits) that are adapted to implement or perform one or more tasks.

"First," "Second," etc. As used herein, these terms are used as labels for nouns that they precede, and do not imply any type of ordering (e.g., spatial, temporal, logical, etc.). For example, a buffer circuit may be described herein as performing write operations for "first" and "second" values. The terms "first" and "second" do not necessarily imply that the first value must be written before the second value.

"Based On" or "Dependent On." As used herein, these terms are used to describe one or more factors that affect a determination. These terms do not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

"Or." When used in the claims, the term "or" is used as an inclusive or and not as an exclusive or. For example, the phrase "at least one of x, y, or z" means any one of x, y, and z, as well as any combination thereof.

### DETAILED DESCRIPTION

Various embodiments of systems and methods for capturing and using multiple illumination channel images for quality assurance and biometric authentication are described. An illumination channel may correspond to a configuration of illumination elements used to capture an image of a biometric aspect, such as an iris of an eye or a periocular region surrounding the eye. Such configurations of the illumination elements may be varied across multiple image captures to produce a set of multiple illumination channel images of the same biometric aspect. For example, images of the same iris may be captured under a set of varied illumination configurations to generate a set of multiple illumination channel images of the iris. Quality assurance using multiple illumination channels may identify attempts to satisfy biometric authentication without actually presenting an actual biometric aspect of a user, such as the periocular region of an enrolled user or an iris of an enrolled user. Also, images captured using different illumination configurations comprise different illumination channels and thus provide a more robust dataset about a given biometric aspect than images captured using the same illumination configuration. A biometric authentication system may use additional information resulting from the multiple illumination channels to make a biometric authentication process more robust, such as by avoiding false positives and false negatives. A biometric authentication system may obtain information about a three-dimensional (3D) structure of a periocular region by capturing images using different illumination configurations. The information about the 3D structure and other qualities of the periocular region captured using the different illumination channels may be used to perform biometric authentication. A generated biometric template may be an enrollment template, and the enrollment template may be stored such that a processor may later compare the enrollment template to a subsequently received biometric input, which may be processed into a match template, associated with a request for authentication. Biometric authentication may include biometric identification of a user, for example, identifying one enrolled user from a set of enrolled users based on a comparison of a match template to enrollment templates corresponding to users of the set of users.

A biometric authentication system may generate different illumination configurations, and corresponding different illumination channels, by varying the wavelengths, intensities, and/or directions of light being emitted by one or more illumination sources. In some embodiments, the biometric authentication system may use different illumination channels in a quality assurance system that may include a trained machine learning model which checks that the illumination channel a captured image appears to have as an image property corresponds to a recorded, or otherwise known, illumination configuration that was used to capture the image. A biometric authentication system may determine, based on a non-match in this quality assurance system, that the captured image is not an image of a biometric aspect of an actual person that was presented to the sensor or otherwise has been faked or manipulated. For example, if under a given illumination configuration light is directed in particular directions, resulting shadows in an image may indicate the illumination configuration used and thus the illumination channel property of that image. If another image is presented that was not captured using the same illumination configuration, the shadows in the other image may not match the expected illumination channel and thus the biometric authentication system may reject the captured image as a low-quality image (e.g., a faked image capture, etc.).

Also, multiple illumination channel images may increase entropy in a dataset used for biometric authentication and thus make the biometric authentication system more robust. For example, if two people have very similar biometric aspects that are difficult to distinguish (just as an example for purposes of illustration) a biometric authentication system may make a false positive authentication. To avoid this, a similarity score threshold used by the biometric authentication system may be set sufficiently high to avoid false positives. However, though the two people have similar biometric aspects, the biometric authentication system may use differences to distinguish between the two people. These differences may manifest themselves differently in images captured under different lighting conditions. Accordingly, the biometric authentication system capturing multiple images of a given biometric aspect under different lighting conditions results in the biometric authentication system having multiple illumination channel images, which provide more information about the biometric aspect and capture more differences (e.g., greater entropy). By having more information, the biometric authentication system may adjust thresholds for determining an authentication to avoid both false positives and false negatives. In this way, a biometric authentication system using multiple illumination channel images can improve a robustness of the biometric authentication system.

A biometric authentication system using multiple illumination channels may be included in devices such as mobile user devices (e.g., smartphones and smart watches), vehicles (e.g., automobiles), stationary devices (e.g., displays, televisions, doorbells, smart home control units, and smart speakers), and head-mounted display devices (e.g., headset-type display devices and glasses-type display devices). A biometric authentication system using multiple illumination channels may analyze biometric aspects such as an iris, a periocular region, a face, an ear, a hand, and other biometric aspects of a user.

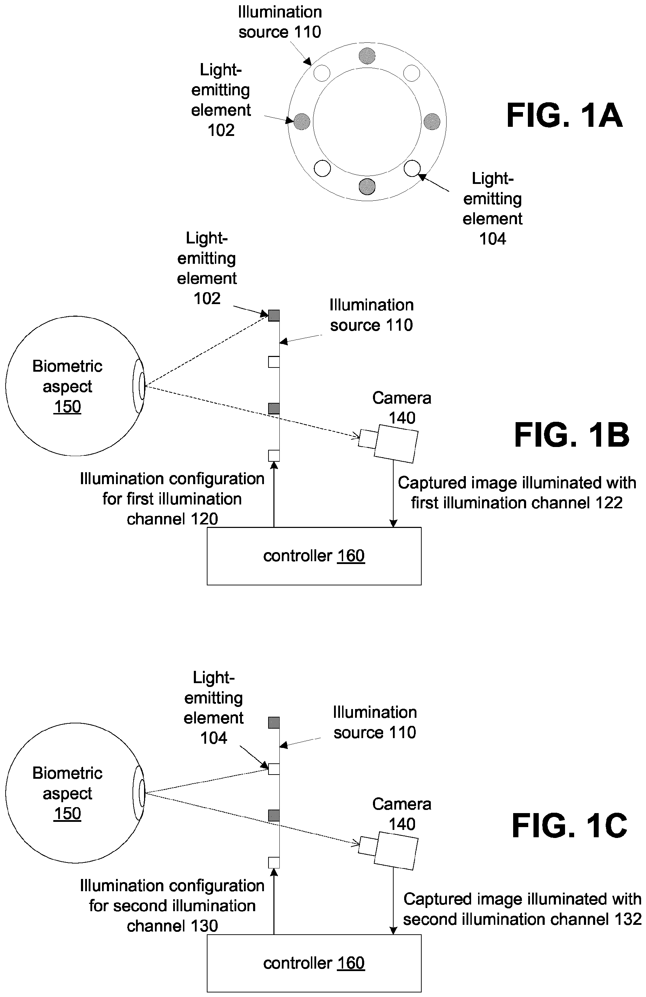

FIG. 1A is a front view of an illumination source with multiple independent light-emitting elements, according to some embodiments.

FIG. 1A shows an example illumination source 110 that includes multiple light-emitting elements 102 and 104. In FIG. 1A, there are eight light-emitting elements arranged in a ring. Note, however, that the number and arrangement of the light-emitting elements in an illumination source 110 may be different. In some embodiments, the light-emitting elements may be light-emitting diodes (LEDs), and in some embodiments other light-emitting elements other than LEDs may be used, or a combination of LEDs and other light-emitting elements may be used. In some embodiments, some of the light-emitting elements may be configured to emit light at a first wavelength and other light-emitting elements may be configured to emit light at a different wavelength. Note that, in some embodiments, more than two wavelengths may be used. Further, in some embodiments, individual light-emitting elements may be configured to selectively emit light at two or more different wavelengths. Individual light-emitting elements may also be configured to emit light at various intensities.

FIG. 1B is a side view of an illumination source using an illumination configuration to generate an illumination channel, as well as a controller, a camera, and a biometric aspect, according to some embodiments.

FIG. 1B illustrates an example imaging system that includes an illumination source, according to some embodiments. The imaging system may include, but is not limited to, one or more cameras 140, an illumination source 110, and a controller 160. In FIG. 1B, the eye camera 140 is pointed towards the eye which is being used as a biometric aspect 150 to receive reflected light from the illumination source 110 that has been reflected off of the biometric aspect 150. In some embodiments, the eye camera 140 may instead or also capture images of the periocular region and portions of the face. In FIG. 1B, the controller 160 has sent an illumination configuration for a first illumination channel 120 to the illumination source 110, which caused one light-emitting element 102 to be activated. The camera 140 has captured an image of the biometric aspect 150 illuminated using the first illumination channel 122 and has sent the image to the controller 160. In some embodiments, more than one camera may be used to capture images of the biometric aspect. A camera may be a visible light camera or a non-visible light camera, for example, an infrared or near-infrared camera.

FIG. 1C is a side view of an illumination source using a different illumination configuration than the one in use in FIG. 1B, as well as a controller, a camera, and a biometric aspect, according to some embodiments.

In FIG. 1C, the controller 160 has selected a second illumination configuration for a second illumination channel 130 and has sent control instructions to the illumination source 110, causing a different light-emitting element 104 to be activated. The camera 140 has captured an image of the biometric aspect 150 illuminated using the second illumination channel 132 and has sent the image to the controller 160. The controller 160 may use the images captured at the different illumination configurations in a multiple illumination channel analysis system.

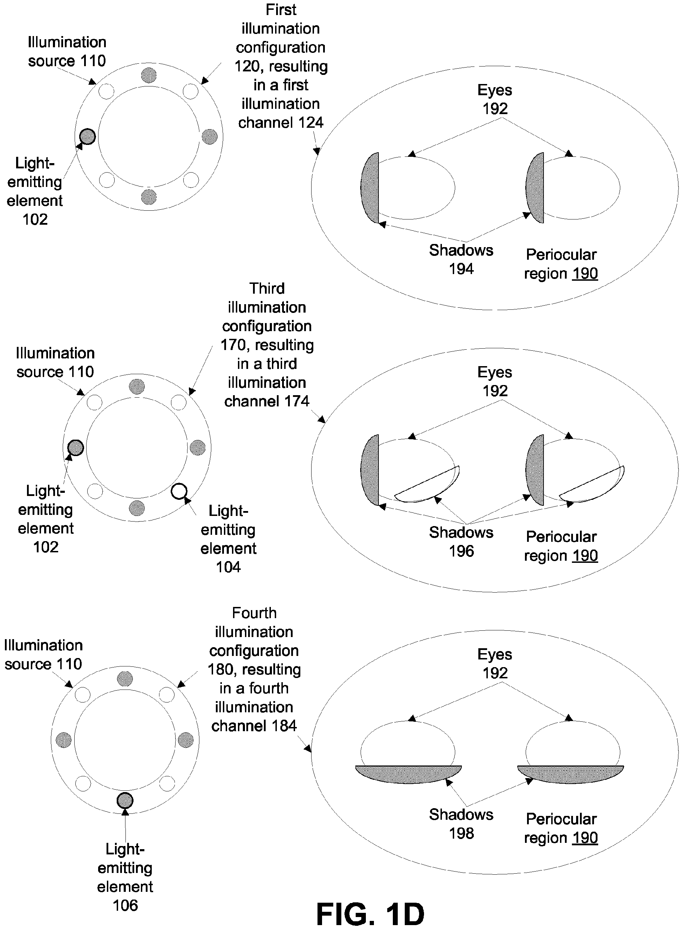

FIG. 1D is a graphical representation of three illumination configurations and three illumination channels that may be generated by the respective illumination configurations, according to some embodiments.

The top pair of images of FIG. 1D show the illumination source 110 at the first illumination configuration 120 that was shown in FIG. 1B, where light-emitting element 102 is active at a specific wavelength and intensity, and the first illumination channel 124 that resulted from the first illumination configuration 120. The illumination channel 124 of the periocular region 190 has shadows 194 around the area of the eyes 192 where there is a change in depth.

The second pair of images shows a third illumination configuration 170 not seen in FIGs. 1B and 1C where two light-emitting elements 102 and 104 are active, and the third illumination channel 174 that results from this third illumination configuration 170. Because there is more than one light-emitting element 102 and 104 active, there are different shadows 196 caused by the depth change around the eyes 192. Illumination channels may comprise multiple active light-emitting elements which may be active at different wavelengths and intensities from each other.

The third pair of images shows a fourth illumination configuration 180 where a light-emitting element 106 not previously used is active, and the fourth illumination channel 184 that results from the fourth illumination configuration 180. Because this is a different illumination channel 184, it has generated different shadows 198 than the shadows 194 and 196 that were generated by other illumination channels 124 and 174. The three shown illumination channels 124, 174, and 184 may be used in a quality assurance system and/or part of a biometric analysis system.

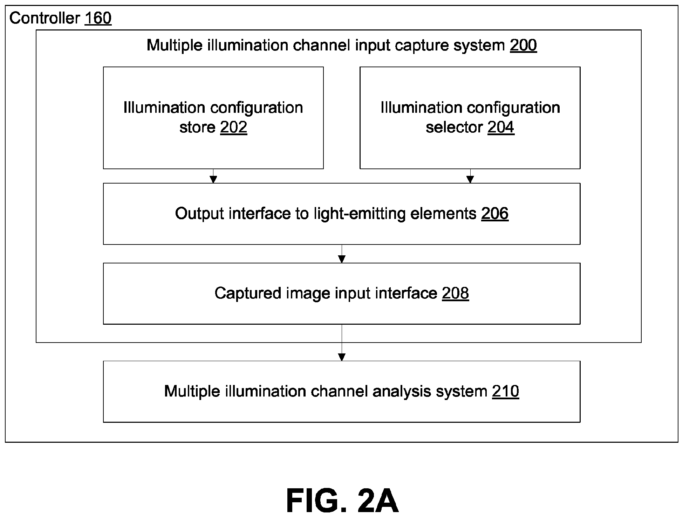

FIG. 2A is a block diagram illustrating components of a multiple illumination channel input capture system that may be implemented by a controller used to capture images for evaluation by a multiple illumination channel analysis system, such as with regard to illumination channels applied when capturing the images, according to some embodiments.

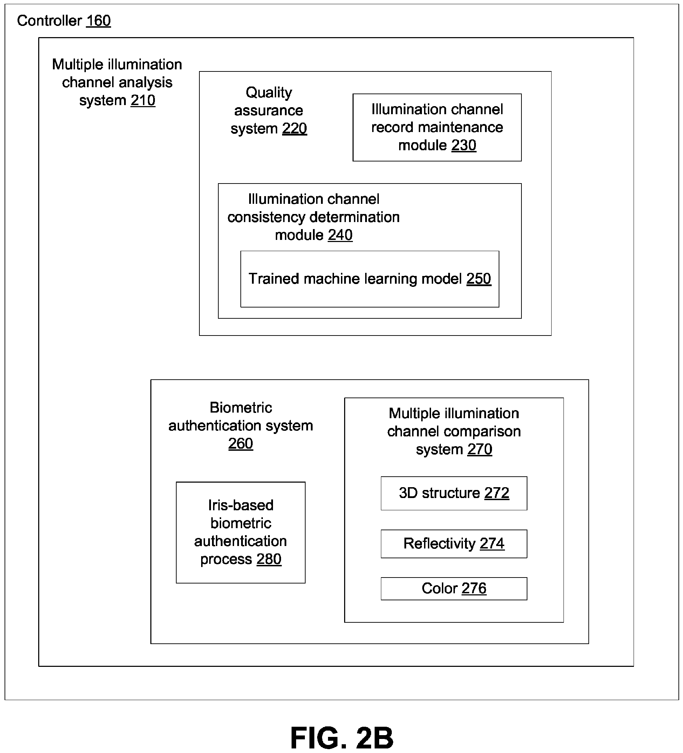

FIG. 2A shows possible components of a multiple illumination channel input capture system 200 that may be implemented via the controller 160. A multiple illumination channel input capture system 200 may be used to generate input using multiple illumination channels for use in a multiple illumination channel analysis system 210. The multiple illumination channel input capture system 200 may include an illumination configuration store 202 and an illumination configuration selector 204, both of which may communicate with an output interface to light-emitting elements 206 to send a selected illumination configuration to control the light-emitting elements. The multiple illumination channel input capture system 200 may also include a captured image input interface 208 to receive the images taken using selected illumination channels. The captured image input interface 208 may provide the captured images to a multiple illumination channel analysis system 210 which may use the captured images and the recorded, or otherwise known, order of the illumination configurations sent by the output interface to light-emitting elements 206. The multiple illumination channel analysis system 210 is further described in FIG. 2B.

FIG. 2B is a block diagram illustrating components of an example multiple illumination channel analysis system that may be implemented by a controller, according to some embodiments.

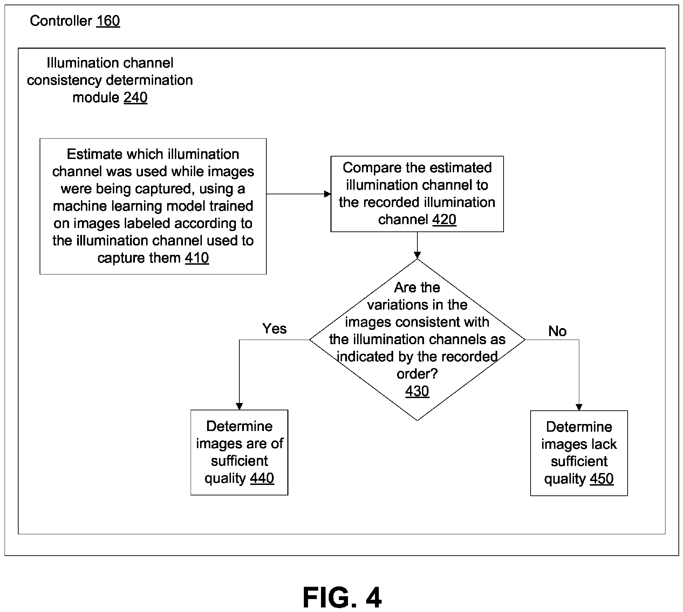

FIG. 2B shows possible components of the multiple illumination channel analysis system 210 being implemented via the controller 160. The multiple illumination channel analysis system 210 may include a quality assurance system 220. The quality assurance system 220 may include an illumination channel record maintenance module 230 to record the illumination channels that images were taken at. There may also be an illumination channel consistency determination module 240 comprising a trained machine learning model 250. The illumination channel consistency determination module is expanded on in FIG. 4. The multiple illumination channel analysis system 210 may also include a biometric authentication system 260. The biometric authentication system 260 may include a multiple illumination channel comparison system 270 comprising a module to analyze 3D structure 272, a module to analyze reflectivity 274, and a module to analyze color 276. The multiple illumination channel comparison system 270 may include one or more trained machine learning models to derive information from captured images.

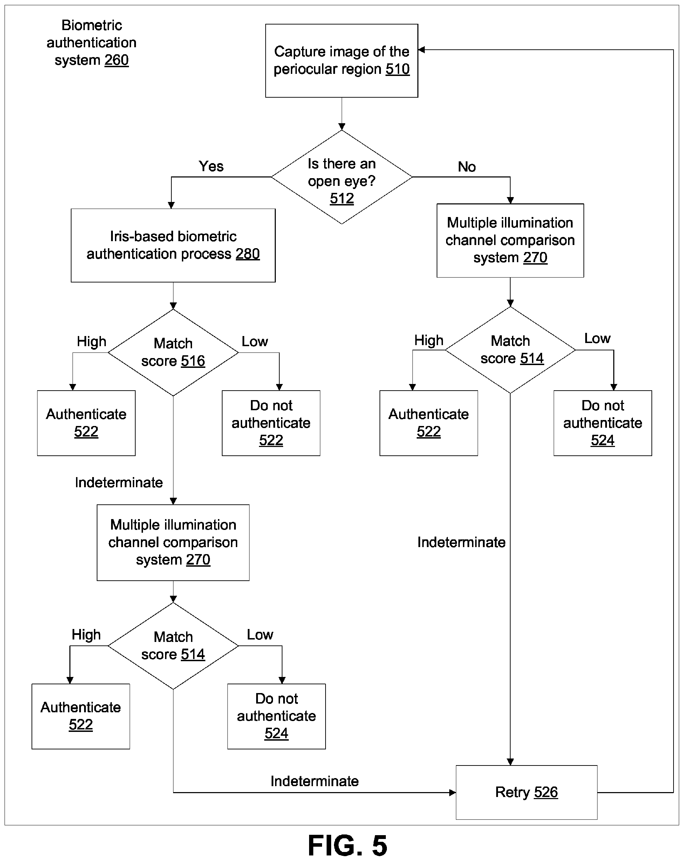

The multiple illumination channel comparison system 270 may compare information about a biometric aspect's 3D structure, reflectivity, and color in an image at an illumination channel to information about an enrolled user's biometric aspect's 3D structure, reflectivity, and color from a stored template generated from one or more images captured at the same illumination channel during enrollment. The use of multiple illumination channels in a single authentication process may increase certainty that the person is an enrolled user by increasing the number of chances for the multiple illumination channel comparison system to detect abnormalities, and increasing the difficulty of mimicking an enrolled user, by using illumination channels that result in dissimilar light interactions with the biometric aspect, such as a periocular region. The multiple illumination channel comparison system 270 may use a similarity scoring algorithm in this comparison to determine whether 3D structure, reflectivity, and color of the periocular region match 3D structure, reflectivity, and color of an enrolled user's periocular region. Various thresholds may be used, such as a similarity score indicating a match of greater than X% (e.g., 90%, 95%, 99%, etc.) is required to consider an image as a match to a stored image captured at the same illumination channel. In some embodiments, the biometric authentication system 260 may require a threshold to be reached at one or more than one illumination channel. The biometric authentication system 260 may also include an iris-based biometric authentication process 280 which may interact with the multiple illumination channel comparison system 270 as shown in FIG. 5. For example, determining a 3D structure match may be a preceding or subsequent step to determining an iris match, as an example. In some embodiments, an iris-based biometric authentication process may be a component of a multiple illumination channel comparison system 270 where images of an iris are compared to stored images of an iris captured at the same illumination channels.

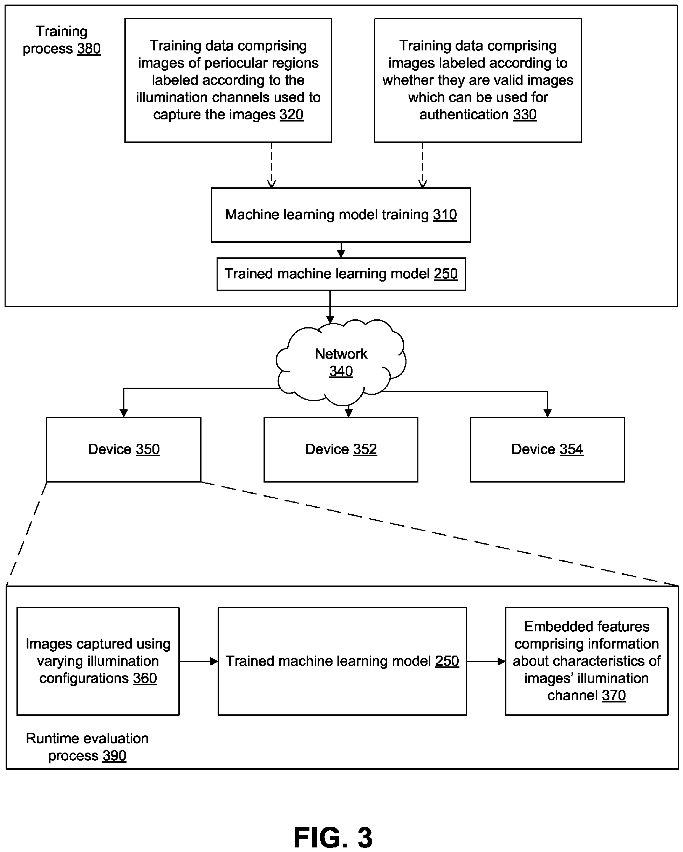

FIG. 3 is a block diagram illustrating a remote training system that trains a machine learning model for use in a quality assurance system and a set of devices that use the trained machine learning model to evaluate illumination channels, according to some embodiments.

For example, in FIG. 3, a machine learning model is trained (310) in a training process 380 so that it may be used in a runtime evaluation process 390. The two training datasets 320 and 330 are sets of training data which may be used in some embodiments to create a trained machine learning model 250. Machine learning model training 310 may use one or more sets of training data. A set of training data comprising periocular region images labeled according to the illumination channels used to capture the images (320) may be used to train the machine learning model on what the illumination channels look like when they are applied to a periocular region. In some embodiments, the training data may be information derived from images, for example, the training data may include 3D structure data, reflectivity, and the wavelengths of reflected light.

A set of training data comprising images labeled according to whether they are valid images which can be used for authentication (330) may be used to train the machine learning model that some images are not useful and may be ignored without the controller needing to calculate objective standards of image quality. Images that are valid may be images that are known to be images of a biometric aspect and have been captured at a known illumination configuration. Valid images may include information that may be used in a biometric authentication system. Invalid images may be images that are not of a biometric aspect and may include images of objects such as an image of an image of a periocular region, images with significant blurring or obstruction, and images captured at a non-informative illumination configuration, such as a complete absence of light. In some embodiments, machine learning model training 310 may use more than one set of training data, or machine learning model training 310 may use a set of training data that uses a combination of labeling systems.

In some embodiments, the trained machine learning model 250 may be sent over a network 340 to various devices, such as devices 350, 352, and 354, and may be used in a runtime evaluation process 390 at the respective devices to determine illumination channel properties of images by analyzing images captured using varying illumination source configurations (360) and generating inferences, such as embedded features, about characteristics of the images' illumination channels 370. The generated inferences may be used by an illumination channel consistency determination module 240 as further described in FIG. 4 to decide whether the inferred illumination channels match the recorded illumination channels.

FIG. 4 is a process flow diagram illustrating an example illumination channel consistency determination process, according to some embodiments.

For example, FIG. 4 shows an illumination channel consistency determination module 240 that is being implemented via a controller 160. At 410, a trained machine learning model trained on images, which may be information derived from images, that are labeled according to the illumination channel used to capture them may estimate which illumination channel was used while images were being captured. At 420, the illumination channel consistency determination module 240 may compare the estimated illumination channel to a recorded, or otherwise known, illumination channel. At 430, the illumination channel consistency determination module 240 decides whether the variations in the images are consistent with the illumination channel as indicated by the recorded order, or order that is otherwise known by the illumination channel consistency module 240. In some embodiments, the illumination channel consistency determination module 240 may make such a decision by determining whether the percentage of correctly estimated illumination channels meets a threshold percentage. In some embodiments, there may be a minimum number of images from different illumination channels analyzed. In some embodiments, the order of illumination channels used may be randomized. At 440, if the variations in the images are consistent with the illumination channels as indicated by the recorded order, the illumination channel consistency determination module 240 may determine the images are of sufficient quality. For example, if images of the same biometric aspect are captured using five illumination channels and it is determined that four or more of the illumination channel properties of the image are a match with the recorded or otherwise known illumination channels used, then the set of images may pass the quality check. Though it should be understood that different numbers of illumination channels and different thresholds may be used in a quality check. At 450, if the variations in the images are not consistent with the illumination channel as indicated by the recorded, or otherwise known order, the illumination channel consistency determination module 240 may determine the images are not of sufficient quality. In some embodiments, a determination that the images are not of sufficient quality may trigger additional authentication requirements.

FIG. 5 is a process flow diagram illustrating a possible biometric authentication process that uses a 3D structure in combination with iris-based biometric authentication, according to some embodiments.

In the example biometric authentication system 260 shown in FIG. 5, the biometric authentication system 260 begins at 510 by causing an input image of the periocular region to be captured. The biometric authentication system 260 then decides at 512 whether there is an open eye in the image. If there is an open eye in the image, the biometric authentication system 260 may proceed to 280, an iris-based biometric authentication process. If there is not an open eye in the image, the biometric authentication system 260 may proceed to 270, a multiple illumination channel comparison system. A biometric authentication system may derive information about an image, for example whether the image includes an open eye, by using a trained machine learning model. A biometric authentication system may use one or more trained machine learning models to derive additional information from images, such as information indicating three-dimensional structure, reflectivity, and wavelengths of reflected light.

In some embodiments, a similarity scoring algorithm may be used to generate a match score. Various thresholds may be used, such as match score indicating a match of greater than X% (e.g., 90%, 95%, 99%, etc.) is required to determine a match is sufficiently "high" and a match score indicating a match of less than Y% (e.g., 90%, 85%, 80%, etc.) is required to determine a match is sufficiently "low." In some embodiments, X% may be higher than Y%. A similarity scoring algorithm may be used in both an iris-based biometric authentication process and a multiple illumination channel comparison system.

At 516, a match score is generated in the iris-based authentication process by comparing information about an iris in the input image to stored information about a registered user's iris. At 522, if the match score is sufficiently high the biometric authentication system 260 may authenticate 522. At 524, if the match score is sufficiently low the biometric authentication system 260 may not authenticate. If the match score for the iris-based authentication process is not sufficiently high or low, the match score may be indeterminate and the biometric authentication system 260 may proceed to 270 a multiple illumination channel comparison system. At 514, a match score 514 is generated in the multiple illumination channel comparison system by comparing information derived from the input image such as periocular region 3D structure, reflectivity, and color to a stored multiple illumination channel template including information derived from an image labeled as corresponding to the illumination channel of the input image, such as periocular region 3D structure, reflectivity, and color. At 522, if the match score is sufficiently high the biometric authentication system 260 may authenticate. At 524, if the match score is sufficiently low the biometric authentication system 260 may not authenticate. At 526, if the match score for the multiple illumination channel comparison system is indeterminate, the biometric authentication system 260 may retry by returning to 510 the image capture step. A multiple illumination channel comparison system may prevent a biometric authentication system 260 from failing due to lack of an open eye or an indeterminate iris match.

In FIG. 5, the biometric authentication system 260 uses the iris-based authentication process 280 if possible, but note that some embodiments may conserve computer resources by using the multiple illumination channel comparison system 270 before or instead of the iris-based authentication process 280. In some embodiments, other types of authentication systems (e.g., such as a fingerprint-based authentication system) may be additionally used.

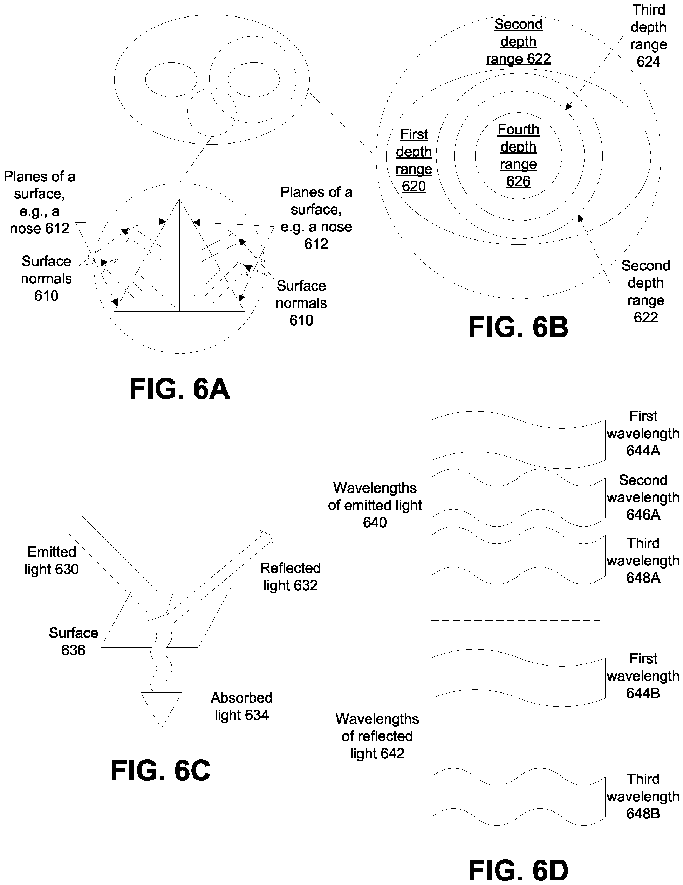

FIGs. 6A-D illustrate examples of information about 3D structure and other biometric surface information that may be used by a multiple illumination channel analysis system, according to some embodiments.

FIG. 6A depicts a portion of the periocular region (e.g., such as a nose) that has been divided into four planes 612, each of which has a surface normal 610 associated with it. Surface normals 610 are vectors normal to the plane of a surface 612. Surface normals 610 may be information about 3D structure that may be used in a biometric authentication system. In some embodiments, surface normals may be generated by first dividing an image into sections and determining the surface normals of the sections or by finding the surface normals at some set frequency across the image. A biometric authentication system may use a trained machine learning model to determine surface normals, for example, by using one or more of shading information of an individual image and perspective from multiple images captured at different angles. A biometric authentication system may use surface normals as information indicating three-dimensional structure. Three-dimensional structure may include information about the size and shape of the biometric aspect.

FIG. 6B depicts a contour map, which may represent 3D structure. This contour map has four depth ranges, 620, 622, 624, and 626. The outside of the contour map is uniformly in the second depth range 622. Moving inward from the outside edge, the depth increases to the deepest depth range, the first depth range 620. Moving further inward, the depth decreases to the second depth range 622 again, and then continues decreasing through the third depth range 624 to the highest depth range, the fourth depth range 626 in the center. A contour map such as this one may represent an approximation of 3D structure in a two-dimensional format. The example contour map in FIG. 6B is of an eye and the area immediately surrounding the eye, but it should be understood that this example is not limiting and a contour map used to represent 3D structure may be of another biometric aspect or a biometric aspect that includes the eye such as the periocular region. A biometric authentication system may use a trained machine learning model to determine a depth map, such as a contour map, as information derived from one or more images. A biometric authentication system may use a depth sensor to obtain depth information. A biometric authentication system may use a depth map as information indicating three-dimensional structure.

FIG. 6C depicts emitted light 630 being reflected off of a surface 636 and becoming reflected light 632. When emitted light 630 is reflected off of a surface 636, some light may be absorbed 634, so the reflected light 632 may have a lower intensity than the emitted light 630. The change in intensity from emitted light 630 to reflected light 632 may allow calculation of the surface's 636 reflectivity. Some of the absorbed light 634 may be light of specific wavelengths, as shown in FIG. 6D.

FIG. 6D also shows a change that may occur when light is reflected off a surface 636, focusing on the absorption 634 of some wavelengths of emitted light 630 by the surface 626 so that the reflected light 632 may not include some wavelengths or may partially include some wavelengths. In some embodiments, the wavelengths of reflected light for a biometric authentication system may correspond to one or more of wavelengths in the visible spectrum and wavelengths not in the visible spectrum.

In FIG. 6D, after the emitted light 630 interacts with the surface 636, the first wavelength 644A of emitted light 640 is unchanged 644B after interacting with the surface 636 and becoming reflected light 642. The second wavelength 646A was completely absorbed by the surface 636 and is not present among the wavelengths of reflected light 642. The third wavelength 648 was partially absorbed by the surface 636 and is less intense as reflected light 648B. These changes in wavelength between emitted light 640 and reflected light 642 may allow calculation of the surface's 636 color. In some embodiments, color and reflectivity may be information that can be used to supplement 3D structure in a multiple illumination channel comparison system 260.

In some embodiments, illumination configurations may vary with regard to additional qualities of light, for example, illumination profiles. An illumination profile indicates the combination of position and intensity of one or more illumination elements, and therefore indicate the uniformity or the lack of uniformity of illumination intensity across a surface, for example, a biometric aspect.

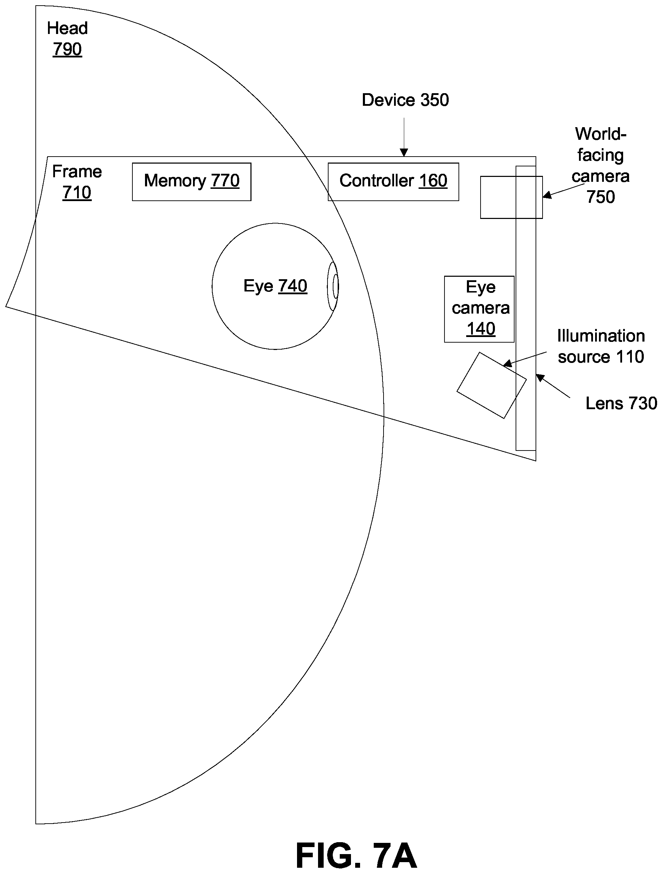

FIGs. 7A-C illustrate example devices that could be used to implement a multiple illumination channel analysis system, according to some embodiments.

FIG. 7A illustrates an example head-mounted device (HMD) that may include components and implement methods as illustrated in FIGs. 1 through 6, according to some embodiments. As shown in FIG. 7A, the HMD may be positioned on the user's head 790 such that the display is disposed in front of the user's eyes. The user looks through the eyepieces onto the display.

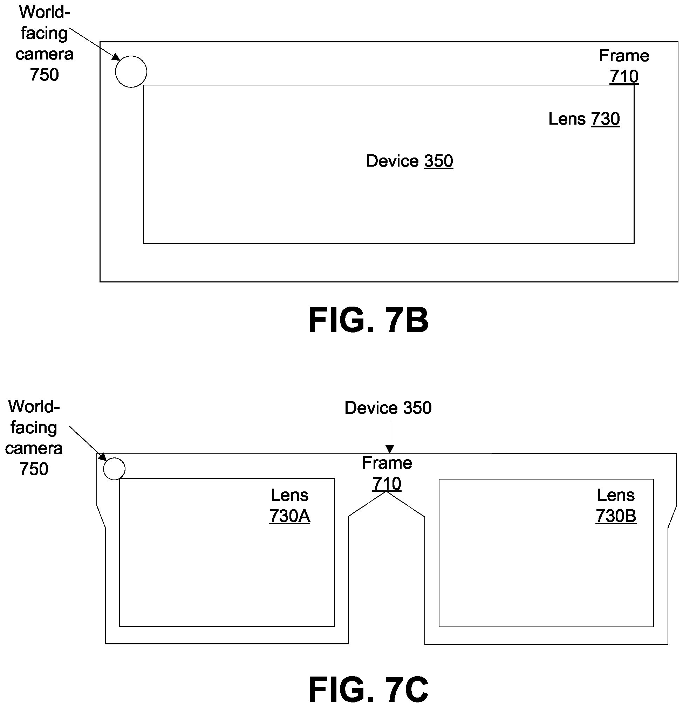

FIGs. 7A-C illustrate example devices in which the methods of FIGs. 1 through 6 may be implemented, according to some embodiments. Note that the devices 350 as illustrated in FIGs. 7A through 7C are given by way of example and are not intended to be limiting. In various embodiments, the shape, size, and other features of an HMD may differ, as may the locations, numbers, types, and other features of the components of an HMD and of the eye imaging system. FIG. 7A shows a side view of an example HMD, and FIGs. 7B and 7C show alternative front views of example HMDs, with FIG. 7B showing a device 350 that has one lens 730 that covers both eyes 740 and FIG. 7C showing a device 350 that has right 730A and left 730B lenses.

The HMD may include lens(es) 730, mounted in a wearable housing or frame 710. The HMD may be worn on a user's (the "wearer") head so that the lens(es) is disposed in front of the wearer's eyes 740. In some embodiments, an HMD may implement any of various types of display technologies or display systems. For example, the HMD may include a display system that directs light that forms images (virtual content) through one or more layers of waveguides in the lens(es) 720; output couplers of the waveguides (e.g., relief gratings or volume holography) may output the light towards the wearer to form images at or near the wearer's eyes 740.

As another example, the HMD may include a direct retinal projector system that directs light towards reflective components of the lens(es); the reflective lens(es) is configured to redirect the light to form images at the wearer's eyes 740. In some embodiments the display system may change what is displayed to at least partially affect the conditions and features of the eye 740 for the purpose of generating or updating the template eye feature representation. For example, the display may increase the brightness to change the conditions of the eye 740 such as lighting that is affecting the eye 740. Another example, the display may change the distance an object appears on the display to affect the conditions of the eye 740 such as the accommodation distance of the eye 740.

In some embodiments, HMD may also include one or more sensors that collect information about the wearer's environment (video, depth information, lighting information, etc.) and about the wearer (e.g., eye or gaze sensors). The sensors may include one or more of, but are not limited to one or more eye cameras 140 (e.g., infrared (IR) cameras) that capture views of the user's eyes 740, one or more world-facing or PoV cameras 750 (e.g., RGB video cameras) that can capture images or video of the real-world environment in a field of view in front of the user, and one or more ambient light sensors that capture lighting information for the environment. Cameras 140 and 750 may be integrated in or attached to the frame 710. The HMD may also include one or more illumination sources 110 such as LED or infrared point light sources that emit light (e.g., light in the IR portion of the spectrum) towards the user's eye or eyes 740.

A controller 160 for a multiple illumination channel analysis system 210 may be implemented in the HMD, or alternatively may be implemented at least in part by an external device (e.g., a computing system or handheld device) that is communicatively coupled to the HMD via a wired or wireless interface. Controller 160 may include one or more of various types of processors, image signal processors (ISPs), graphics processing units (GPUs), coder/decoders (codecs), system on a chip (SOC), CPUs, and/or other components for processing and rendering video and/or images.

Memory 770 for a multiple illumination channel analysis system 210 may be implemented in the HMD, or alternatively may be implemented at least in part by an external device (e.g., a computing system) that is communicatively coupled to the HMD via a wired or wireless interface. The memory 770 may, for example, be used to record video or images captured by the one or more cameras 750 integrated in or attached to frame 710. Memory 770 may include any type of memory, such as dynamic random-access memory (DRAM), synchronous DRAM (SDRAM), double data rate (DDR, DDR2, DDR3, etc.) SDRAM (including mobile versions of the SDRAMs such as mDDR3, etc., or low power versions of the SDRAMs such as LPDDR2, etc.), RAMBUS DRAM (RDRAM), static RAM (SRAM), etc.

In some embodiments, one or more memory devices may be coupled onto a circuit board to form memory modules such as single inline memory modules (SIMMs), dual inline memory modules (DIMMs), etc. Alternatively, the devices may be mounted with an integrated circuit implementing system in a chip-on-chip configuration, a package-on-package configuration, or a multi-chip module configuration. In some embodiments DRAM may be used as temporary storage of images or video for processing, but other storage options may be used in an HMD to store processed data, such as Flash or other "hard drive" technologies. This other storage may be separate from the externally coupled storage mentioned below.

While FIG. 7A only shows an illumination source 110 and cameras 140 and 750 for one eye, embodiments may include illumination sources 110 and cameras 140 and 750 for each eye, and user authentication may be performed for both eyes. In addition, the illumination source 110, camera 140, and PoV camera 750 may be located elsewhere than shown. An HMD can have an opaque display, or can use a see-through display, which allows the user to see the real environment through the display, while displaying virtual content overlaid on the real environment.

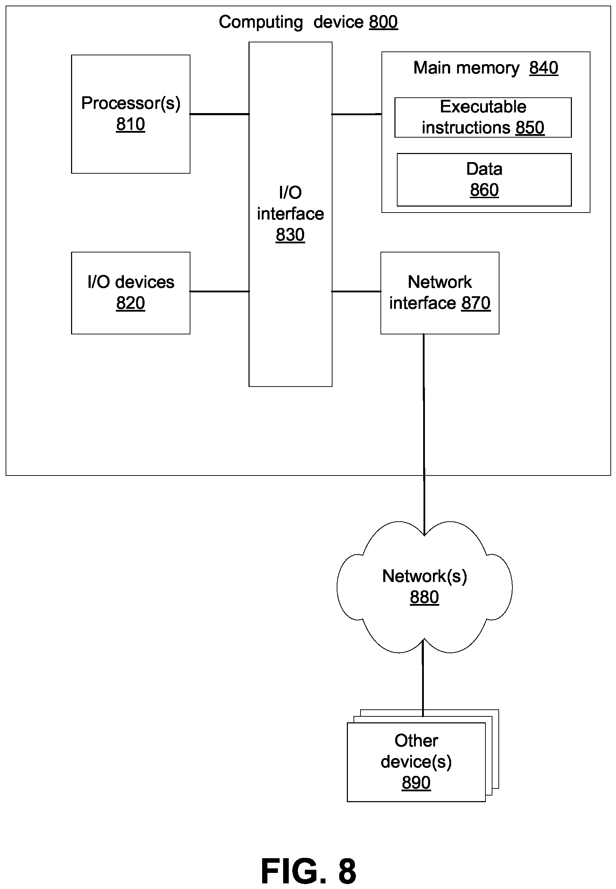

FIG. 8 is a block diagram illustrating an example computing device that may be used, according to some embodiments.

In at least some embodiments, a computing device that implements a portion or all of one or more of the techniques described herein may include a general-purpose computer system that includes or is configured to access one or more computer-accessible media. FIG. 8 illustrates such a general-purpose computing device 800. In the illustrated embodiment, computing device 800 includes one or more processors 810 coupled to a main memory 840 (which may comprise both non-volatile and volatile memory modules and may also be referred to as system memory) via an input/output (I/O) interface 830. Computing device 800 further includes a network interface 870 coupled to I/O interface 830, as well as additional I/O devices 820 which may include sensors of various types.

In various embodiments, computing device 800 may be a uniprocessor system including one processor 810, or a multiprocessor system including several processors 810 (e.g., two, four, eight, or another suitable number). Processors 810 may be any suitable processors capable of executing instructions. For example, in various embodiments, processors 810 may be general-purpose or embedded processors implementing any of a variety of instruction set architectures (ISAs), such as the x86, PowerPC, SPARC, or MIPS ISAs, or any other suitable ISA. In multiprocessor systems, each of processors 810 may commonly, but not necessarily, implement the same ISA. In some implementations, graphics processing units (GPUs) may be used instead of, or in addition to, conventional processors.

Memory 840 may be configured to store instructions and data accessible by processor(s) 810. In at least some embodiments, the memory 840 may comprise both volatile and non-volatile portions; in other embodiments, only volatile memory may be used. In various embodiments, the volatile portion of system memory 840 may be implemented using any suitable memory technology, such as static random-access memory (SRAM), synchronous dynamic RAM or any other type of memory. For the non-volatile portion of system memory (which may comprise one or more NVDIMMs, for example), in some embodiments flash-based memory devices, including NAND-flash devices, may be used. In at least some embodiments, the non-volatile portion of the system memory may include a power source, such as a supercapacitor or other power storage device (e.g., a battery). In various embodiments, memristor based resistive random-access memory (ReRAM), three-dimensional NAND technologies, Ferroelectric RAM, magnetoresistive RAM (MRAM), or any of various types of phase change memory (PCM) may be used at least for the non-volatile portion of system memory. In the illustrated embodiment, executable program instructions 850 and data 860 implementing one or more desired functions, such as those methods, techniques, and data described above, are shown stored within main memory 840.

In one embodiment, I/O interface 830 may be configured to coordinate I/O traffic between processor 810, main memory 840, and various peripheral devices, including network interface 870 or other peripheral interfaces such as various types of persistent and/or volatile storage devices, sensor devices, etc. In some embodiments, I/O interface 830 may perform any necessary protocol, timing, or other data transformations to convert data signals from one component (e.g., main memory 840) into a format suitable for use by another component

(e.g., processor 810). In some embodiments, I/O interface 830 may include support for devices attached through various types of peripheral buses, such as a variant of the Peripheral Component Interconnect (PCI) bus standard or the Universal Serial Bus (USB) standard, for example. In some embodiments, the function of I/O interface 830 may be split into two or more separate components, such as a north bridge and a south bridge, for example. Also, in some embodiments some or all of the functionality of I/O interface 830, such as an interface to memory 840, may be incorporated directly into processor 810.

Network interface 870 may be configured to allow data to be exchanged between computing device 800 and other devices 890 attached to a network or networks 880, such as other computer systems or devices. In various embodiments, network interface 870 may support communication via any suitable wired or wireless general data networks, such as types of Ethernet network, for example. Additionally, network interface 870 may support communication via telecommunications/telephony networks such as analog voice networks or digital fiber communications networks, via storage area networks such as Fibre Channel SANs, or via any other suitable type of network and/or protocol.

In some embodiments, main memory 840 may be one embodiment of a computer-accessible medium configured to store program instructions and data as described above for FIG. 1 through FIG. 7 for implementing embodiments of the corresponding methods and apparatus. However, in other embodiments, program instructions and/or data may be received, sent, or stored upon different types of computer-accessible media. Generally speaking, a computer-accessible medium may include non-transitory storage media or memory media such as magnetic or optical media, e.g., disk or DVD/CD coupled to computing device 800 via I/O interface 830. A non-transitory computer-accessible storage medium may also include any volatile or non-volatile media such as RAM (e.g., SDRAM, DDR SDRAM, RDRAM, SRAM, etc.), ROM, etc., that may be included in some embodiments of computing device 800 as main memory 840 or another type of memory. Further, a computer-accessible medium may include transmission media or signals such as electrical, electromagnetic, or digital signals, conveyed via a communication medium such as a network and/or a wireless link, such as may be implemented via network interface 870. Portions or all of multiple computing devices such as that illustrated in FIG. 8 may be used to implement the described functionality in various embodiments; for example, software components running on a variety of different devices and servers may collaborate to provide the functionality. In some embodiments, portions of the described functionality may be implemented using storage devices, network devices, or special-purpose computer systems, in addition to or instead of being implemented using general-purpose computer systems. The term "computing device," as used herein, refers to at least all these types of devices, and is not limited to these types of devices.

The methods described herein may be implemented in software, hardware, or a combination thereof, in different embodiments. In addition, the order of the blocks of the methods may be changed, and various elements may be added, reordered, combined, omitted, modified, etc. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A system, comprising:
an illumination source comprising a plurality of light-emitting elements, wherein one or more individual ones of the light-emitting elements are configured to be controlled independently of one or more other light-emitting elements to emit light towards one or more biometric aspects;
a camera configured to capture light reflected from the one or more biometric aspects; and
a controller comprising one or more processors, wherein the controller is configured to:
direct the illumination source to emit light using a plurality of selected configurations for the light emitting elements resulting in the emitted light being emitted according to a plurality of illumination channels;
direct the camera to capture respective images of the object when respective ones of the illumination channels are applied; and
analyze the respective captured images for use in biometric authentication, wherein the analysis accounts for variations across the respective captured images due to the application of the respective ones of the illumination channels.

2. The system of claim 1 wherein the selected plurality of illumination channels comprise particular combinations of the light emitted from the light-emitting elements having selected:
wavelength combinations;
intensities; and
directions.

3. The system of claim 1 wherein to perform the analysis of the respective captured images the controller is further configured to:
cause a record to be maintained of an order in which ones of the respective illumination channels are applied when capturing the respective ones of the images;
determine whether the variations observed in the respective ones of the images are consistent with the illumination channels applied according to the recorded order.

4. The system of claim 3 wherein the analysis of the respective captured images is performed using a trained machine learning model.

5. The system of claim 4 wherein the trained machine learning model was trained using a dataset comprising images labeled according to the respective illumination channels at which the respective images were captured.

6. The system of claim 1 wherein to perform the analysis of the respective captured images the controller is further configured to:
compare information derived from one or more of the respective captured images to information derived from one or more respective registration images corresponding to a user wherein a same set of illumination channels were applied to the one or more respective captured images and the one or more respective registration images.

7. The system of claim 6 wherein the comparison of the information derived from the one or more respective captured images and the information derived from the one or more respective registration images is performed as part of a user authentication process wherein the user authentication process further comprises an iris-based biometric authentication process.

8. The system of claim 6 wherein information considered in the comparison of the information derived from the one or more of the respective captured images to the information derived from the one or more respective registration images comprises one or more of:
information indicating three-dimensional structure of the one or more biometric aspects;
reflectivity of the surface of the one or more biometric aspects; and
wavelengths of light reflected from the one or more biometric aspects.

9. The system of claim 6 wherein the controller is configured to perform said compare the information derived from the one or more of the respective captured images to the information derived from the one or more respective registration images, in response to:
a determination that the variations observed in the information derived from the respective ones of the images are consistent with illumination channels applied according to an order when capturing the respective ones of the images.

10. The system of claim 6 wherein the information derived from one or more of the respective captured images and the information derived from one or more respective registration images is determined by one or more trained machine learning models.

11. The system of any of claims 1 through 10 wherein the system further comprises a head-mounted device.

12. The system of any of claims 1 through 10 wherein the system further comprises:
a mobile user device;
a vehicle;
a stationary device.

13. One or more non-transitory, computer-readable, storage media, storing program instructions that when executed on or across one or more computing devices cause the one or more computing devices to:
select a plurality of configurations for an illumination source comprising a plurality of light-emitting elements, wherein one or more individual ones of the light-emitting elements are configured to be controlled independently of one or more other light-emitting elements to emit light towards one or more biometric aspects;
direct the illumination source to emit light using the plurality of selected configurations for the light emitting elements resulting in the emitted light being emitted according to a plurality of illumination channels;
direct the camera to capture respective images of the object when respective ones of the illumination channels are applied; and
analyze the respective captured images for use in biometric authentication, wherein the analysis accounts for variations across the respective captured images due to the application of the respective ones of the illumination channels.

14. The computer-readable storage media of claim 13 or claim 14 wherein the plurality of illumination channels comprise particular combinations of the light emitted from the light-emitting elements having selected:
wavelength combinations;
illumination profiles;
intensities; and
directions.

15. The computer-readable storage media of claim 13 or claim 14 wherein the analysis of the respective captured images is performed by:
selecting respective one or more expected illumination channels based on the respective one or more captured images; and
determining whether the respective one or more expected illumination channels are the same as the respective one or more illumination channels applied when the respective one or more images were captured.
